# EUROPEAN PATENT SPECIFICATION

(11) **EP 2 808 248 B1**
(45) Date of publication and mention of the grant of the patent: **06.04.2016**
(21) Application number: 13705515.8
(22) Date of filing: 14.01.2013
(51) Int. Cl.: B63H 21/20

(54) **METHOD OF CONVERTING STEAM TURBINE-POWERED LNG CARRIERS**
VERFAHREN ZUR UMWANDLUNG VON DAMPFTURBINENBETRIEBENEN FLÜSSIGERDGASTRÄGERN
PROCÉDÉ DE TRANSFORMATION DE MÉTHANIERS PROPULSÉS PAR DES TURBINES À VAPEUR

(30) Priority: 13.01.2012 ES 201230050
(43) Date of publication of application: 03.12.2014
(73) Proprietor: Empresa Naviera Elcano, S.A., 28003 Madrid (ES)
(72) Inventor: SÁEZ PARGA, Francisco Javier, E-28003 Madrid (ES)
(74) Representative: ABG Patentes, S.L.
(86) International application number: PCT/ES2013/070008
(87) International publication number: WO 2013/104818

(56) References cited:
- EP-A1- 2 311 727
- ES-A1- 2 120 870

## Description

As indicated by the title, the present specification relates to a method of converting steam turbine-powered LNG carriers used for transporting liquefied natural gas, characterized in that diesel electric propulsion with several dual-fuel electric power diesel generators or others, and several electric propulsion engines, is added, the mechanical power of which is injected in the existing gearbox or in the shaft line, keeping the existing steam turbine propulsion plant fully operative.

The carrier resulting from the conversion has a double propulsion plant: the former steam turbine propulsion plant, and the new diesel electric propulsion plant, being able to use one, the other or both, as needed, and all this while maintaining both the shaft line and the gearbox initially existing in the carrier.

Propulsion methods used today, their advantages and drawbacks and the current state of the art referring to electric propulsion and generation in said carriers, existing conversion options used today, will be described below for the purpose of aiding in understanding the invention and describing the method claimed and proposed by the present invention subsequently.

It must be indicated that throughout the description certain English words and abbreviations that are commonly used and widespread in this field of technology will be defined and used; they will be defined the first time they are mentioned and after that the English words alone will be used for the sake of precision and concision.

### Field of the Invention- LNG carriers

LNG carriers are designed almost exclusively for transporting bulk liquefied natural gas, hereinafter referred to as LNG, at atmospheric pressure. There are other possible cargos, such as ethylene or liquefied petroleum gases, hereinafter LPG, but they are of a residual nature. Pressurized natural gas can also be transported, but this is scarcely relevant today.

Generally, the carriers are relatively large, greater than 35,000 m³ up to 290,000 m³, and the most common ones are carriers between 120,000 and 180,000 m³. Even when different construction. technologies are used, they all share a series of common characteristics:
- Cargo transport pressure: Atmospheric pressure.
- Transport temperature: -16,3°C.
- Continuous cargo evaporation, hereinafter referred to as boil-off, occurs naturally in all these carriers. This boil-off has to be burned. It is generally burned to produce energy for electric power generation and propulsion. The mentioned boil-off has to be burned even when there are no shipboard energy requirements calling for it. This can be done in boilers, sending the excess steam to the condenser, hereinafter dumping, or in closed flares, hereinafter gas combustion unit or GCU. A typical boil-off figure (hereinafter boil-off rate) when the carrier is under fully loaded conditions is 0.15% of the cargo capacity per day, i.e., for an average 150,000 m³ carrier, this would mean about 225 m³ of LNG per day. It is common practice to keep a certain amount of LNG in the tanks in the return voyage in ballast conditions. This gas also produces a boil-off that is a fraction of what is produced under loaded conditions, of the order of 30% to 40% of that corresponding to the figure of fully loaded conditions.
- LNG carrier service speed is generally about 19.5 knots. There are reasons for this relatively high speed: the boil-off, the price of the carrier and others. The immediate consequence is a high propulsion power requirement and a fuel consumption that is twice as high.
- LNG carrier building prices are high. Conventional carriers of about 150,000 m³ can cost between 150 and 200 million USD.
- LNG carriers have a long service life. There are LNG carriers in service for about 40 years. There are several reasons for this long service life: high quality, non-aggressive cargo, long propulsion life, initial high cost, very careful maintenance and others. Obviously a risk of achieving this long service life is that they become obsolete, i.e., either technically obsolete because of propulsion changes, because of the size or for other reasons. In any case the current fleet is often times being paid off at 30/40 years. This fact is at the very root of this invention.

### State of the Art- LNG carrier propulsion

The general characteristics of different types of propulsion used in LNG carriers and their evolution over recent years are described below.

Almost all LNG carriers can use natural gas, liquid fuels such as heavy fuel-oil (hereinafter HFO), marine diesel-oil (hereinafter MDO) or marine gas oil (hereinafter MGO) for electric power generation and propulsion. The carriers can use one or the other or both fuels at the same time in the desired proportion. The use of HFO is not allowed or is limited in certain geographical areas, for example in ports in Western Europe. The boil-off will always have to be burned one way or another.

There is a type of carriers, in a limited proportion, provided with a shipboard reliquefaction plant, which generally only use liquid fuel in the propulsion engines. The present invention is not applicable to these carriers, so they will be omitted hereinafter.

In LNG carriers with a capacity of the order of 150,000 m³, of which there is a large number, the propulsion power is of the order of 25 MW to 30 MW.

An essential characteristic of the propulsion of LNG carriers is that a very high degree of reliability is required of it. There are various reasons: safety due to the transported cargo; integration in a transport chain; supply schedule compliance assurance, cost of the boil-off in the event of a failure-induced downtime and various other reasons.

About 100 years ago, most ships used steam propulsion either through alternative machines or through steam turbines.

Fifty years ago, only some large oil tankers, warships, some passenger ships and LNG carriers which were starting to be used then, used steam turbine propulsion.

Ten years ago, only LNG carriers were still using steam turbine propulsion. There were two main reasons for maintaining steam turbine propulsion:
- The very high reliability of steam turbine installations, their long service life and limited maintenance.
- The diesel engine, which is by all means predominant in merchant ship propulsion, could not burn gas coming from the boil-off, which is capable of producing a very important part of the energy required for propulsion.

As mentioned, up until about 8 years ago, virtually all LNG carriers used steam turbine propulsion, including the newly built carriers.

In recent years, a series of propulsion methods that are alternatives to steam turbine propulsion have been developed for new LNG carriers. Although there are several alternatives, there are two main alternatives that have been developed and applied to a greater extent.

The first alternative is based on carriers with diesel electric propulsion with dual-fuel four-stroke diesel engines. These engines can burn liquid fuel, whether it is HFO, MDO or MGO, and can also burn natural gas that is incorporated into the combustion air at a pressure of about 6 bars. Said engines each operate an alternator. This alternator produces electric power that is used to supply the carrier's electric system and to operate the electric propulsion engines, which are generally from one to four in number, most commonly two, through the corresponding converters. These electric engines in turn operate the propeller or propellers, generally through a gear reducer. Most carriers have a single propeller, some have two. These diesel electric plants generally have four diesel engines, sometimes three and sometimes five. The fitted engines have about 1000 KW per cylinder and the plants generally have between 30 and 40 cylinders in total, i.e., the installed electric power is from 30 to 40 MW. This is the dominant alternative at present.

It must be indicated that these dual four-stroke engines operate with liquid fuel according to the diesel cycle and with gaseous fuel according to an Otto cycle or the like.

The second alternative consists of conventional, slow, two-stroke diesel engines which can only burn liquid fuels, with a shipboard reliquefaction plant for reliquefying the boil-off and the corresponding electric power generation plant with four-stroke diesel engines, the power of which must be increased to cover the requirements of the reliquefaction plant.

Carriers are still being built with steam turbines but in a much lower proportion. Some carriers with steam turbine propulsion that are being built or have recently been built use more efficient steam cycles, primarily cycles with intermediate reheating (hereinafter reheat cycles). Even in these cases, the consumption of the steam turbine plants is considerably greater than that of diesel engine turbine plants.

The underlying reasons for this change in propulsion methods of LNG carriers are primarily:
- The lower efficiency and higher specific consumption of steam turbine plants. Even when any specific consumption figure must be carefully qualified, steam turbine plants have a specific consumption of the order of 290 gr/kW hour with liquid fuel. However, dual four-stroke engines have a specific consumption of the order of 190 gr/kW hour. These figures must be corrected and considered according to a series of coefficients, but in any case they show an enormous difference in favor of the diesel engine.
- The higher price of fuels, liquid fuels in particular. Even when the prices are very volatile, a metric ton of HFO costs about 650 USD.
- The technical availability of dual four-stroke engines capable of burning both liquid fuels and natural gas.

To summarize, in a standard figure subject to all necessary clarifications, an LNG carrier can consume about 175 mT of HFO a day, entailing about 113,750 USD/day with liquid fuel when it is steam turbine-powered, and about 120 mT of HFO, entailing about 78,000 USD/day. The daily cost difference is about 35,750 USD/day. It must be stressed that the preceding figures refer to liquid fuel consumption and that the prices of all fuels are extremely volatile. There is a series of clarifications that must be made in any case, but it is a fact that there is a very substantial difference in favor of dual diesel engines.

A similar comparative calculation could be made for the case of carriers using natural gas as a fuel. The efficiency ratio is similar (slightly less favorable for dual engines), but it is difficult to set the price of natural gas for LNG carrier propulsion.

As a consequence of the foregoing, in the LNG carrier fleet in service right now, there are three types of propulsion:
- Most carriers use steam turbine propulsion. These carriers are between one and forty years old, many of them being less than ten years old and having variable sizes, with a considerable amount of them between 120,000 and 170,000 m³.
- There are other carriers, all of which are less than six years old, with diesel electric propulsion with dual engines. Such propulsion is dominant right now. Sizes are similar to the aforementioned carriers, between 70,000 and 175,000 m³.
- There are some types of carriers that have already been mentioned with conventional diesel engine propulsion that can only use liquid fuel and are less than six years old and large, all of them larger than 200,000 m³. As previously stated, the present invention would not be applicable to these carriers.

Today, and due to the evolution of the art, other types of propulsion for LNG carriers are being developed and offered on the markets. In particular, there are proposals such as:
- Dual two-stroke diesel engines capable of burning liquid fuel or natural gas at a very high pressure. In both cases they work with the diesel cycle. These engines virtually exist at the prototype level. They have never been installed in carriers, nor are carriers being built with this technology. Their biggest drawback is the very high pressure at which gas must be compressed and injected. Such propulsion will most likely be used in the future.
- Gas turbine-based plants, either with turbo-electric or mechanical coupling. They have not been installed in any LNG carrier, or in any LNG carrier being built to date.
- Other alternative proposals, such as hybrid plants, with composite mechanical/electric propulsion. They have not been applied to date.

A fair number of documented references describing different types or variants of electric propulsion systems applied for ships can be found, such as for example patents ES2087662 "*Dispositivo de propulsion de un buque* (Ship Propulsion Arrangement)", ES2089408 *"Sistema de corriente electrics para vehiculos marinos* (Electric Power System for Marine Vehicles)", ES2184356 *"Instalacion de accionamiento eléctrico para barcos* (Electrical Drive Mechanism for Ships)", ES2197862 *"Propulsión eléctrica para barco* (Electric Ship Propulsion)", ES2278756 *"Dispositivo y procedimiento de propulsión de un barco* (Ship Propulsion Arrangement and Method)", and ES2297036 *"Sistema de propulsión para un barco* (Boat Propulsion System)", but they are all envisaged to be carried out during the process of building ships, not as a viable alternative to installing new drive systems in existing ships.

Specific references to engine installations for LNG carriers can also be found, such as for example that described in patent US2007277534 *"Shipboard regasification for LNG carriers with alternate propulsion plants",* which describes solutions for regasification in carriers with drive plants not based on steam turbines, or patent WO03006313 *"A Method of disposing of Gas and Propulsion Apparatus in a Ship",* which uses a set of two electric engines with diesel electric generation, but without combining them with a steam plant, or patent JP2004051050, which describes a "Propulsion Device for an LNG carrier", which proposes a diesel engine-electric motor combination, but without combining it with a steam plant, and as in the preceding cases, it is only viable when manufacturing the ship; the use thereof is not profitable for new drive system installations in existing ships. Document ES2120870 is considered as the closest prior art and discloses a method of converting diesel-powered LNG carriers.

### Background of the Invention- Known conversion possibilities

In the fleet existing today, excluding carriers with reliquefaction and two-stroke diesel engine plants, which can only use liquid fuel, there are two types of propulsion:
- A majority of carriers with steam turbine propulsion, with a specific consumption of the order of 290 gr/kwh with all reserves and specifications, and
- A considerable number of carriers that are less than six years old with diesel electric propulsion using dual four-stroke engines. The specific consumption of said engines is of the order of 190 gr/kwh.

In all aspects, with the exception of the essential aspect of fuel cost, steam turbine carriers operate in a very satisfactory manner. The difference in fuel cost per day of navigating under fully loaded conditions at 19.5 knots of a standard carrier is in many cases greater than 30,000 USD/day, so there is clearly a technical demand for possible conversions in the propulsion plants of these steam turbine-powered LNG carriers which will allow reducing fuel consumption, improving their economic competitiveness and preventing enormous investments for replacing them.

The fact that a type of relatively new steam turbine-powered carriers are in a situation in which there is no competition due to high fuel costs associated with steam turbine propulsion is not new.

That situation already occurred on a large scale in large oil tankers between 1975 and 1990 and also in passenger ships. Then there was a large number of new drive system installations. Even when there were several variants, the solutions used were generally:
A.- Eliminating the steam turbine and replacing it with two four-stroke diesel engines coupled to the propeller through a reducer. It must be noted that in all cases, (high pressure and low pressure) turbines, the main condenser and the gearbox were completely eliminated. In some cases the rest of the shaft line was maintained while in others it was modified.
   This type of conversion was the most common in oil tankers and was performed more than half the time. The resulting carriers were not problem-free, particularly suffering problems associated with the high maintenance required by four-stroke engines. Any maintenance, failure or repair operation on the engines meant immobilizing the carrier for the time said operation lasted.
   In most cases, the main boilers were maintained for unloading, heating the cargo and auxiliary services. The electric power generation plant had to be modified to a large extent.
B.- Eliminating the steam turbine and replacing it with a directly coupled two-stroke diesel engine. This was used on few occasions. In some cases, within a broader conversion a new stern of the carrier was built. In some cases the main boilers were maintained while in other they were replaced. The plant electric had to be modified.
   Results from the maintenance and operation viewpoint were better.
C.- Eliminating the steam turbine and replacing it with diesel electric propulsion. This was used especially in passenger ships.

The maintenance problems associated with four-stroke diesel engines are greatly reduced by the possibility of shutting off the engine that has to be repaired or maintained without affecting the operating capacity of the carrier.

All these possible embodiments have the drawback that in all cases the existing steam turbine and gearbox were eliminated.

Right now and due to the reasons described above, the need to convert existing LNG carriers with steam turbine propulsion (more than 200 carriers) into carriers with another type of more energy-efficient propulsion has again been considered for the purpose of improving the cost-effectiveness of their operation.

The aforementioned possibilities which shall be referred to as conventional possibilities logically apply to existing LNG carriers.

Some of these possibilities are briefly described, and some of the drawbacks and problems resulting from the application thereof are indicated below.

### Converting to diesel electric propulsion with dual four-stroke engines

Essentially, the converted carrier would have a propulsion similar to that of carriers that are built or are being built with said type of propulsion. The conversion would entail:
- Eliminating high and low pressure turbines, the main condenser and the gearbox.
- Installing a number of dual four-stroke diesel engines, their corresponding alternators, a system of switchboards, transformers, converters, electric propulsion engines and a new gearbox.
- Installing a low pressure compressor plant (of the order of 6/8 bars), in principle with 100% redundancy.

This would result in diesel electric propulsion with dual engines as in LNG carriers with such propulsion. It would typically have a dual diesel engine power of the order of 115% of the power of the pre-existing turbines. In normal carriers it would require more than 30 MW of power from generators and would normally have 3 or 4 dual engines, as in carriers with said propulsion.

The main boilers could be maintained or eliminated but in any case it would have to have an auxiliary system for burning the excess boil-off when the latter is not required for propulsion, i.e., either boilers plus a condenser for excess steam or a closed flare (hereinafter gas combustion unit or GCU).

During the conversion there would be considerable disassembly and scrapping work, as well as a considerable problem concerning space and adaptation for installing all the new equipment.

Once the carrier is converted, it would have a fuel consumption similar to current fuel consumptions of the same technology and maintenance and operation costs and difficulties similar to current costs and difficulties of the same technology. There would be several second order differences, according to how the subject of boil-off and other subjects have been solved.

The conversion time and cost must be qualified as being high.

There is a possibility that the new propulsion has a power that is lower than the existing power. In said case, the speed of the carrier as well as savings would be reduced.

It is technically feasible and known.

### Conversion to diesel propulsion with dual two-stroke engines with high pressure gas

Essentially, the converted carrier would have propulsion by means of a dual, gas or liquid fuel, two-stroke diesel engine with a standard power of about 30 MW.

It would further be necessary to install a gas compression and treatment plant with compressors, in principle with 100% redundancy, having a pressure of about 300 bars.

It would further be necessary to remodel the electric power generation plant, even for unloading, solving other aspects and the problem of burning the boil-off as in the preceding case.

It would be fundamental to completely eliminate the main turbines, the main condenser and the gearbox.

The main boilers and the shaft line could be maintained or eliminated.

The resulting carrier would have a fuel consumption that is slightly less than those of the carrier having diesel electric propulsion described in the preceding section.

The conversion cost must be qualified as being high.

The conversion time would likewise be high, because all the disassembly and scrapping work has to be performed *in situ,* and the installation work can begin only once the aforementioned has been done.

The degree of preparation and prefabrication of elements is inevitably limited.

The following factors must be considered in this conversion option:
- To date, there are no precedents of installing nor experience in operating engines of this type or very high pressure compression plants of this type in LNG carriers or in another type of carriers. It is possible that this will occur in the near future, but it has not been done so far.
- It is a type of conversion in which, in addition to being a new engine technology, it is impossible or very difficult to provide a redundancy system. The propulsion engine maintenance operations will necessarily entail immobilizing the carrier. Propulsion engine maintenance

is not allowed during loading and unloading operations. Other conversion options

There is a series of different conversion possibilities. Some of these possibilities are very briefly listed below, without seeking to provide major details or to be fully comprehensive.
- Using dual four-stroke engines in mechanical propulsion and with electric engines coupled to the hybrid shaft line (partly mechanical, partly electric).
- Installing turbo-electric propulsion similar to diesel electric propulsion but using gas turbines as primary power producers.
- Installing one or more conventional two-stroke diesel engines for liquid fuels only, further installing a reliquefaction plant for the boil-off.
- Combining the preceding solutions with other building methods such as building a new previously built stern, installing a Pod propulsion system or the like.
- Improving the efficiency of the steam cycle by essentially using a reheat cycle.
- Other various methods of conversion.

These known methods of converting carriers entail a series of common problems and drawbacks:
- In all cases, the proposed propulsion method involves eliminating high and low pressure turbines, the main condenser and the gearbox, as well as a number of pieces of auxiliary machinery.
- This involves significant disassembly and scrapping work and the subsequent costs in terms of conversion cost.
- It further entails the loss of steam turbine propulsion, with the subsequent loss of its very high reliability.

The foregoing is not altogether true in the case of conversion to a reheat cycle, because only the high pressure turbine would be eliminated and replaced, but in this case the savings that can be obtained are only a relatively minor fraction of those corresponding to the use of dual diesel engines of either technology.

### Description of the Invention

To solve the drawbacks existing today concerning converting steam propulsion plants of existing LNG carriers for the purpose of improving their energy efficiency, the method of converting steam turbine-powered LNG carriers object of the present invention has been conceived, in which electric propulsion comprising several electric power generators, preferably dual-fuel diesel, gas turbine generators or others, and several electric propulsion engines, is added, the mechanical power of which is injected in the existing gearbox or in the shaft line, keeping the existing steam turbine propulsion plant fully operative.

The carrier resulting from the conversion has a double propulsion plant: the former steam turbine propulsion plant, and the new diesel electric propulsion plant, being able to use one, the other or both, as needed, and all this while maintaining both the shaft line and the gearbox initially existing in the carrier.

The electric generators are preferably dual four-stroke diesel engines, using between one and four dual engines, giving rise to diesel electric propulsion. It is envisaged that in an alternative embodiment the electric generators are gas turbines, giving rise in this case to turbo-electric propulsion by gas turbines, or a combination of both types. There will preferably be two electric propulsion engines.

The generators and engines will be complemented with the necessary auxiliary elements: high voltage switchboards, transformers, frequency converters, additional low voltage switchboard or switchboards, compressors, heat exchangers, pumps, exhaust gas boilers, etc...

All the main elements except the electric propulsion engines will preferably be housed in modules that will preferably be installed on the main deck, close or adjacent to the house referred to as "casing" existing in the stern area of all LNG carriers.

The manner in which the mechanical power of the electric propulsion engines is injected (power take in or PTI hereinafter) allows for various embodiment variants:
Introducing power in the existing gearbox:
   - The power take in (PTI) of the electric propulsion engines is performed directly in the existing gearbox in both (high pressure HP and low pressure LP) second reduction pinion shafts without using a new gearbox.
   - The power take in (PTI) of the electric propulsion engines is performed in both (HP and LP) second reduction pinion shafts of the existing gearbox using new additional gearboxes, the forward or astern location of the PTI being possible.
Introducing power in the shaft line:
   - By means of one or two electric engines the shafts of which are the intermediate shafts themselves.
   - By means of one or two electric propulsion engines (generally two) introducing power in the intermediate shaft through one or two tunnel gear reducers.

This described method keeps the entire existing steam turbine propulsion plant intact. The carrier will thus be provided with double propulsion by steam turbines or diesel electric with dual four-stroke engines. This is conducive to the following operation modes in the converted carrier:
- Steam mode: The carrier operates as it did before the conversion. The electric propulsion engines are declutched or idle. No fuel saving occurs.
- Electric mode: The dual diesel engines or the gas turbines produce 100% of the necessary electric power. They power the electric propulsion engines and the rest of the electricity consumers. The turbines and gearbox rotate at their corresponding revolutions. Fuel saving characteristic of diesel electric propulsion occurs. It must be indicated that respective couplings-clutches can optionally be incorporated between the high and low pressure turbines, such that it is possible to disconnect the turbines from the gearbox.
- Hybrid steam-electric mode: It is possible to produce part of the power in the steam turbines and the rest with the electric system. This requires modifying the control and regulation systems, and in no case can the original power be exceeded. The fuel saving would be partial. This option would be used in the event of a failure or partial lack of availability of one of the systems, generally of a component of the electric system. It could be used systematically in the event that the new electric propulsion has a power less than the previously installed power of steam turbines and when maximum power is required.

This invention allows performing a type of conversion that is an optimal solution, because it allows meeting a series of objectives:
- Optimal energy saving.
- Reliability and redundancy. After the conversion, the very high degree of propulsion reliability that the carrier had before the conversion is maintained.
- Redundancy in the installation, which is an added value for reliability.
- Proven components. The LNG maritime transport industry has an exceptional schedule compliance and safety track record. To that end, even though it has been evolving particularly in relation to propulsion, this has been performed by maintaining a degree of prior experience in each component, even when these components can be combined or coupled in different manners, incorporating known technologies and components.
- Consideration of all operating situations. Before being transformed, the carrier has an operation suitable in all operating situations such as navigating under loaded conditions at high speed, at reduced power, navigating under ballast conditions, loading, unloading, anchored, in standby, etc. Furthermore, in all these circumstances it can consume HFO, MDO, MGO and natural gas, in the possible proportions, from either the natural boil-off or by forcing evaporation.
- After being converted, the carrier maintains the same or greater operating flexibility in all situations, and it additionally has a fuel saving in the greatest possible proportion in most situations, and especially in those situations which occur more frequently and have the highest fuel consumption.
- Minimization of the conversion time in the shipyard.
- Limited conversion cost.
- Minimization of the extent of disassembly and scrapping.
- Minimization of the conversion jobs to be done *in situ.*
- Maximization of the use of prefabricated modules to be installed in easy-to-reach places for large modules.
- Use of processes and concepts for new constructions to the greatest extent possible before those for repair or conversion.
- Limited testing cost and time. In maritime industry, anything involving the safety and operating capacity of the carrier has to be comprehensively tested. In a newly built LING carrier, the dock, sea and gas trial processes are comprehensive, long and expensive. In the case of a conversion, a concept which allows limiting the time of the trials to be conducted before re-delivery is particularly suitable.
- Minimization of immobilization times for converted carrier maintenance. LNG carriers with steam turbine propulsion have very short immobilization times.
- Limitation of the increase in maintenance costs. Besides high fuel costs, the steam turbine propulsion of LNG carriers has multiple advantages, among others, low maintenance costs.

### Advantages of the Invention

This method of converting steam turbine-powered LNG carriers being presented provides multiple advantages with respect to the methods available today, the most important advantage being that it provides steam turbine-powered LNG carriers with a more economical and energy efficient shipboard power generation and propulsion plant without needing to eliminate the existing propulsion plant, therefore minimizing the reform time, with the subsequent financial saving.

Another important advantage is that it allows obtaining a very significant fuel saving that is as high as in carriers with diesel electric propulsion with dual engines which are dominant in newly built carriers right now.

It is important to point out that the very high reliability of the steam turbine installation is maintained.

Another advantage is that the resulting carrier has a double propulsion, combining the best properties of both, with three possible operating modes.

The advantage entailed by being able to resume commercial operation of the carrier while the new system trials both with liquid fuel and with gas are being completed must also be mentioned, reducing the impact of the long and costly process of port, sea and gas trials.

It is also important to point out the advantage entailed by reducing the disassembly and scrapping to be performed for the conversion to a minimum, which entails a minimized conversion time.

The use of proven technical solutions for which there is prior experience and a high degree of reliability cannot be forgotten because only the manner in which said solutions are combined is completely new.

Another advantage is that it is a method of conversion in which interventions on existing elements already in service are minimized.

It is important to point out the perfect adaptation to a modular construction in which elements are added in locations that are not used, reducing the disassembly and modifications to a strict minimum, allowing a very high degree of prefabrication and reducing the conversion time.

Furthermore, the conversion is less expensive. On one hand, the costs of materials are reduced because the existing gearbox is used, it being unnecessary to purchase and install a new gearbox. It is also not necessary to purchase or install a gas combustion unit. Furthermore, the modular construction is less expensive and faster than scrapping and installing the numerous elements that must be added.

Finally, it must be pointed out that the novelty that is claimed is its use in a converted LNG carrier with double propulsion for housing most of the new diesel electric propulsion, with the exception of the propulsion engines, and its installation in additional modules in, close to or on the house of the existing casing and/or on the main deck, because up until now, like the stationary electric equipment, dual engines have always been installed below deck, never in additional houses, in all LNG carriers with diesel electric propulsion.

### Description of the Drawings

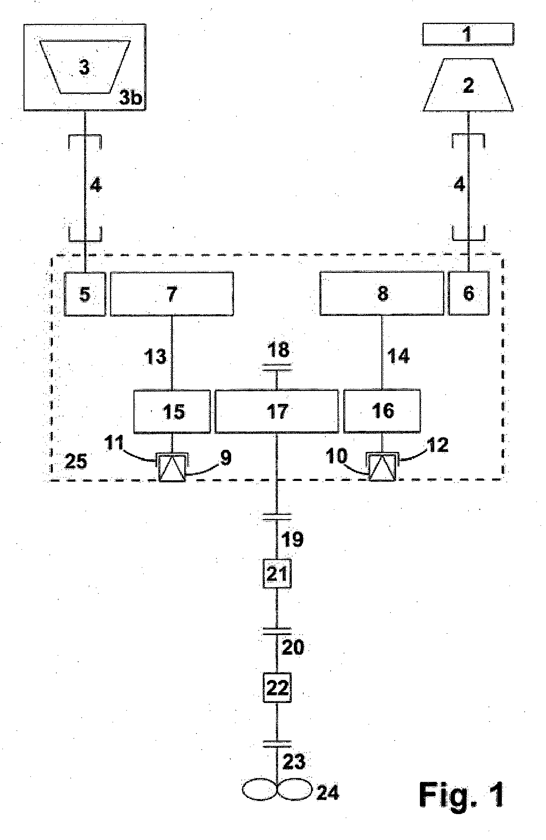

To better understand the object of the present invention, several practical embodiments of a method of converting steam turbine-powered LNG carriers have been depicted in the attached drawings.
In said drawings, Figure 1 shows a generic block diagram of the propulsion plant of a typical LNG carrier.
Figure 2 shows a block diagram of a typical LNG carrier with the propulsion modified by means of introducing power directly in the gearbox.
Figure 3 shows a block diagram of a typical LNG carrier with the propulsion modified by means of introducing power in the gearbox by means of new auxiliary reducers, with PTI at the bow.
Figure 4 shows a block diagram of a typical LNG carrier with the propulsion modified by means of introducing power in the gearbox by means of new auxiliary reducers, with PTI at the stern.
Figure 5 shows a block diagram of a typical LNG carrier with the propulsion modified by means of introducing power in the shaft line.
Figure 6 shows a block diagram of a typical LNG carrier with the propulsion modified by means of introducing power in the shaft line, with a gearbox for increasing revolutions (step-up gear).

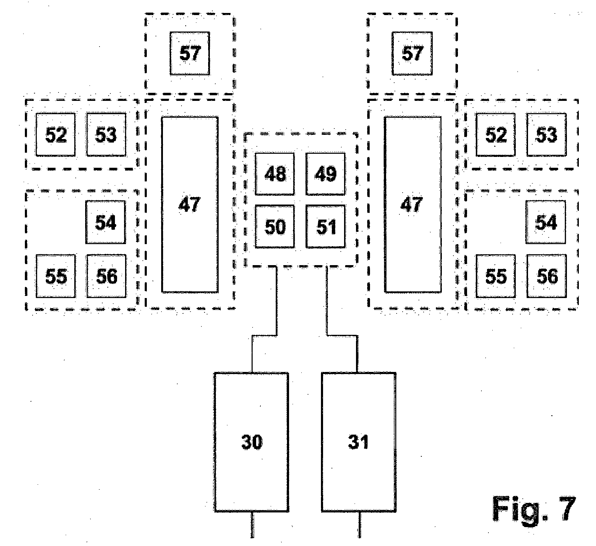

Figure 7 shows a block diagram of the main integral elements of the invention which must be added to the carrier,, with modular distribution.

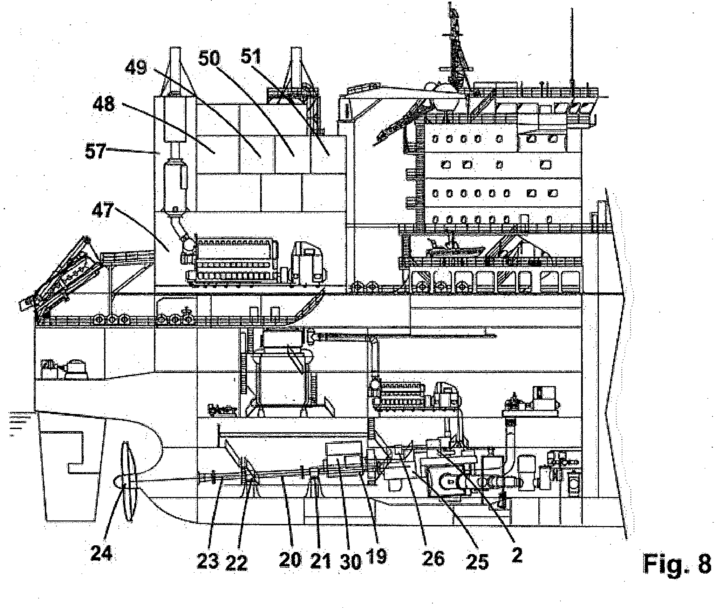

Figure 8 shows a simplified profile view of the stern of an LNG carrier showing the location of some of the elements both of the original propulsion plant and of the new added plant.

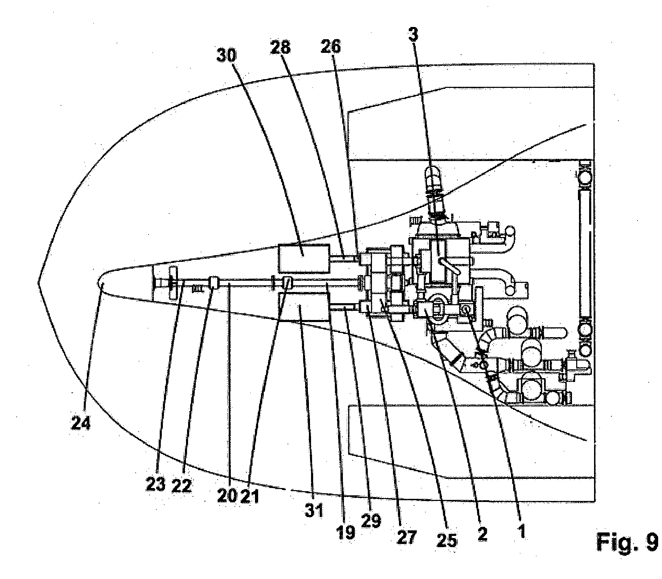

Figure 9 shows a simplified plan view of the lower part of the area of the stern of an LNG carrier, the location of some of the elements both of the original propulsion plant and of the new added plant.

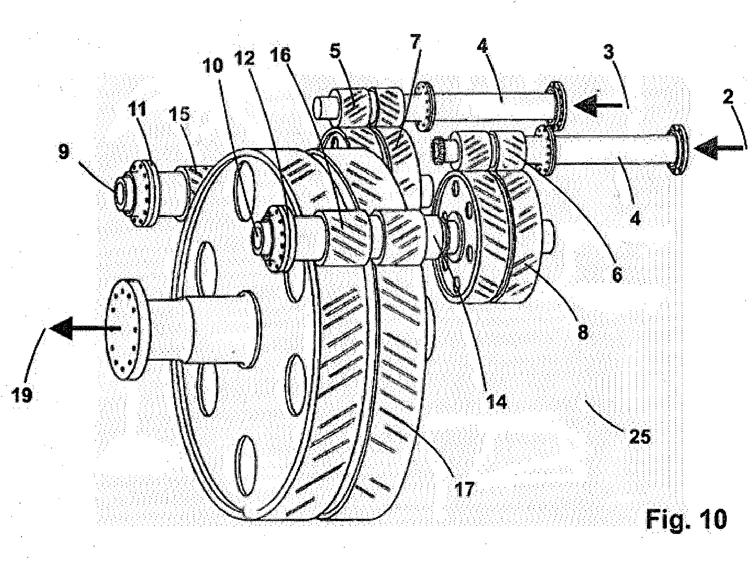

Figure 10 shows a view of the main integral elements of a gearbox of those commonly used in LNG carriers.

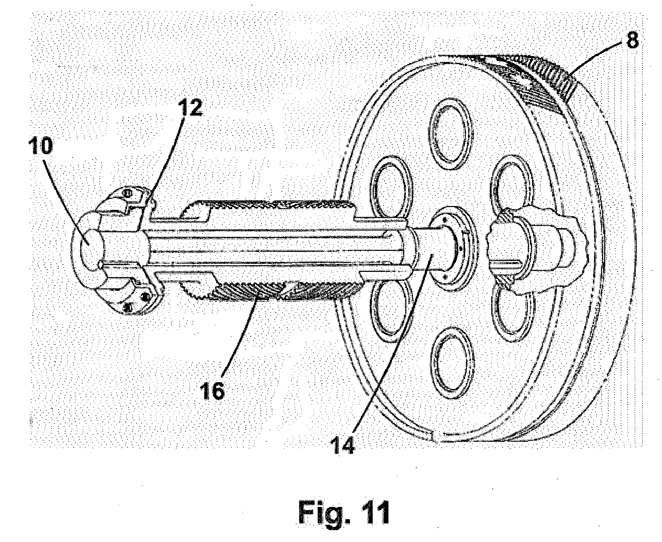

Figure 11 shows a detailed view of the shaft of the first reduction wheel and second reduction pinion, either of the integral high pressure,side or of the integral low pressure side of a gearbox of those commonly used in LNG carriers.
Figure 12 shows a more detailed diagram of the manner in which the inside of elements (10) and (12) on the high pressure side is modified, being identically applicable to elements (9) and (11) of the low pressure side for incorporating the power input from the electric propulsion engines.

The most important elements of the invention can be seen in these figures with the following reference numbers:
Control valve (1)
High pressure turbine HPT (2)
Low pressure turbine LPT (3)
Main condenser, located under the LPT (3b)
Flexible coupling (4)
First reduction pinion (5), low pressure side
First reduction pinion (6), high pressure side
First reduction wheel (7), low pressure side
First reduction wheel (8), high pressure side
Conical coupling (9), low pressure side
Conical coupling (10), high pressure side
Flexible coupling (11), low pressure side
Flexible coupling (12), high pressure side
Hollow shaft with another internal shaft (quill shaft) (13), low pressure side
Hollow shaft with another internal shaft (quill shaft) (14), high pressure side
Second reduction pinion (15), low pressure side
Second reduction pinion (16), high pressure side
Second reduction wheel (17)
Thrust bearing (18)
Intermediate bow shaft (19)
Intermediate stern shaft (20)
Relief bearing of bow (21)
Relief bearing of stern (22)
Propeller shaft (23)
Propeller (24)
Gearbox (25)
Modified conical coupling (26), low pressure side
Modified conical coupling (27), high pressure side
Flexible coupling and/or clutch (28), low pressure side
Flexible coupling and/or clutch (29), high pressure side
Electric propulsion engine (30), low pressure side
Electric propulsion engine (31), high pressure side
Additional gearbox (32), low pressure side
Additional gearbox (33), high pressure side
Additional flexible coupling (34), low pressure side
Additional flexible coupling (35), high pressure side
Optional additional hydraulic clutch (36), low pressure side
Optional additional hydraulic clutch (37), high pressure side
Modified intermediate bow shaft (38)
Modified bearings (42)
Coupling (43) of the intermediate shaft with the tunnel step-up gear
Main wheel (44) of the tunnel gear
Additional clutched pinion (45) of the step-up gear, low pressure side
Additional clutched pinion (46) of the step-up gear, high pressure side
Electric generator sets (47) including engines, heat engines and alternators
High voltage switchboards (48)
Transformers (49)
Converters (50)
Additional low voltage switchboard or switchboards (51).
Natural gas compressors (52)
Natural gas heat exchangers (53)
Pumps (54)
Purifiers (55)
Auxiliary heat exchangers (56) of the generator sets
Exhaust gas boilers (57)

### Preferred Embodiment of the Invention

The method of converting steam turbine-powered LNG carriers object of the present invention basically comprises, as can be seen in the attached drawings, adding one or several electric generator sets (47), together with their auxiliary components (48, 49, 50, 51, 52, 53, 54, 55, 56, 57), powering one or several electric propulsion engines (30, 31) transmitting power by means of a mechanical connection with the gearbox (25) and the output shaft line assembly (19, 20, 23) of the existing steam turbine (2, 3) propulsion plant. The mechanical power is injected in the gearbox (25) or in the existing output shaft line assembly (19, 20, 23) by means of a specific method, keeping the existing steam turbine (2, 3) propulsion plant fully operative, with the feature that the existing steam turbine propulsion plant is maintained such that the carrier resulting from the conversion has a diesel electric or turbo-electric propulsion, a steam turbine propulsion and a hybrid propulsion combining the preceding two. Output shaft line assembly is understood as the assembly primarily defined by the intermediate bow shaft (19), the intermediate stern shaft (20) (if there are two intermediate shafts) and the propeller shaft (23) operating the propeller (24).

The auxiliary components of the electric generator sets (47) include one or several high voltage switchboards (48), transformers (49), converters (50), additional low voltage switchboards (51), compressors (52), heat exchangers (53), pumps (54), purifiers (55), heat exchangers (56) and exhaust gas boilers (57).

Both the electric generator sets (47) and a substantial part of their auxiliary components (48, 49, 50, 51, 52, 53, 54, 57) are installed distributed in several prefabricated modules located on the main deck close to, adjacent to or on the house of the so-called "casing" existing in all LNG carriers in the stern area on the engine room.

A typical arrangement distributed in modules would be:
- Modules of electric generator sets (47). These generally include several generator sets along with a substantial part of their auxiliary elements. They can be grouped in larger modules. These modules incorporate machines with very heavy alternating and rotating elements.
- Modules of stationary electric elements. There would be several sub-modules that would incorporate:
   - High voltage switchboards (48).
   - Transformers (49).
   - Converters (50).
   - Additional low voltage switchboard or switchboards (51) .
- In this case, the modules incorporate moderately heavy, high-volume stationary elements with a considerable number of interconnections and electric wiring.
- Module/modules of natural gas compressors (52) and heat exchangers (53) for supplying gas to the electric generator sets (47). These modules will be installed on the main deck in the tank area, close or adjacent to the house of natural gas compressors existing in all LNG carriers.
- Modules or sub-modules of pumps (54), purifiers (55) and heat exchangers (56) containing all the auxiliary services especially required by diesel generators. These elements can be installed partly in the aforementioned modules or inside the engine room.
- Modules of exhaust gas boilers (57). These will normally be arranged on the modules of the electric generator sets (47).

The electric generator sets (47) will preferably be dual-fuel diesel type, giving rise to diesel electric propulsion, although it is envisaged that they can alternatively be of the gas turbine type, giving rise to turbo-electric propulsion, or a diesel and gas turbine combination, giving rise to a composite diesel-turbo-electric propulsion, in all cases combined with the existing steam turbine (2, 3) propulsion

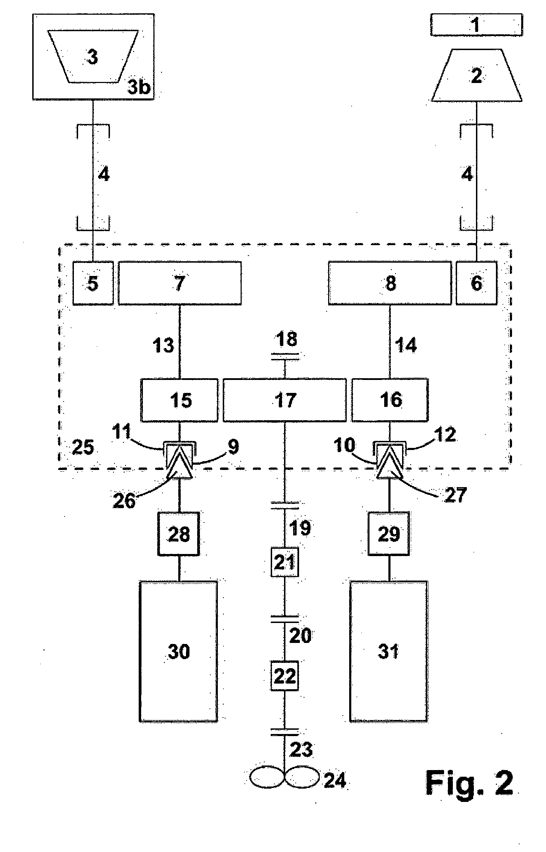

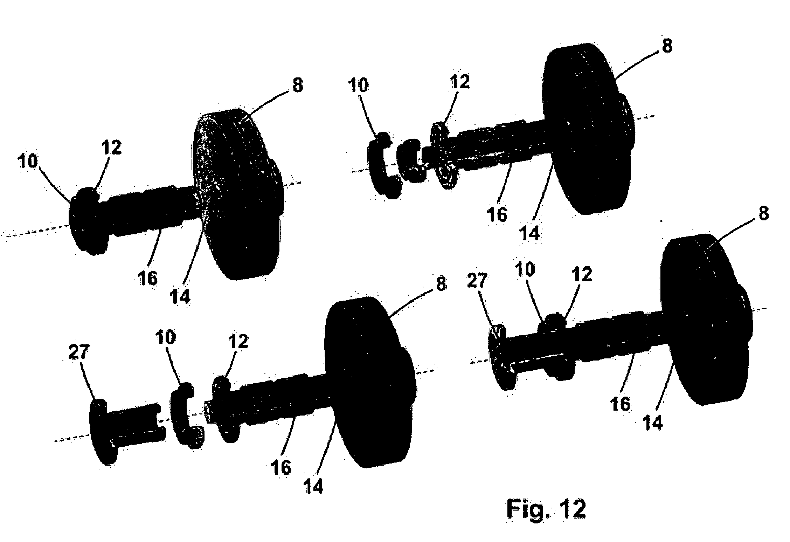

The manner in which the mechanical power of the electric propulsion engines (30, 31) is injected (power take in or PTI) allows for various embodiment variants, which share the location of the electric propulsion engines (30, 31) next to the output shaft line assembly (19, 20, 23) and existing gearbox (25) in the steam turbine (2, 3) propulsion plant:
Introducing power in the existing gearbox (25):
   According to Figure 2, the direct introduction of power in the gearbox (25), consisting of a first phase of modifying the stern end pieces of the hollow shaft with another internal shaft (13) of the low pressure side and of the hollow shaft with another internal shaft (14) of the high pressure side, referred to as quill shaft, of the existing gearbox (25) by means of modifying or replacing the conical coupling (9) on the low pressure side and the other conical coupling (10) on the high pressure side, respectively, such that the modified coupling includes at its stern end a shaft for the power input from the respective electric propulsion engines (30, 31), further including the corresponding flexible couplings and/or clutches (28, 29), all of which according to that shown in Figure 12.

The modified' conical couplings (26, 27) that are part of the existing gearbox (25) thus allow introducing the power of the electric propulsion engines (30, 31) located astern of the gearbox (25).

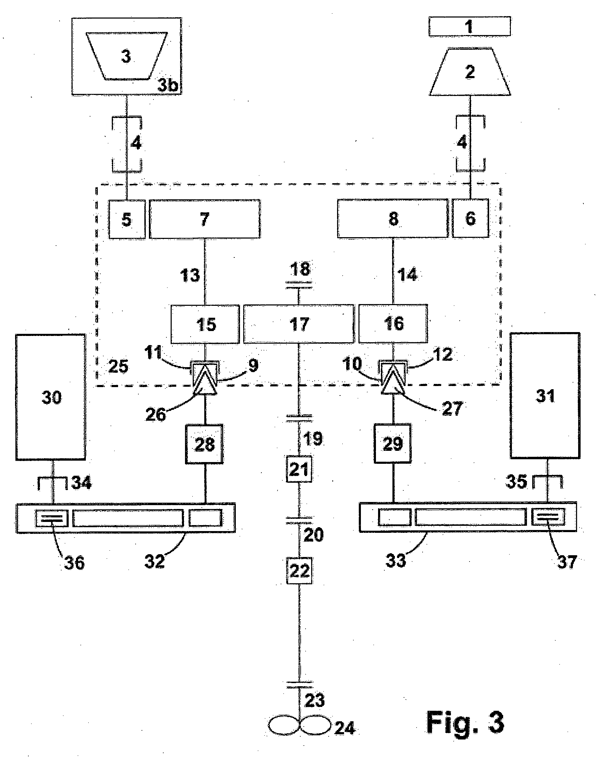

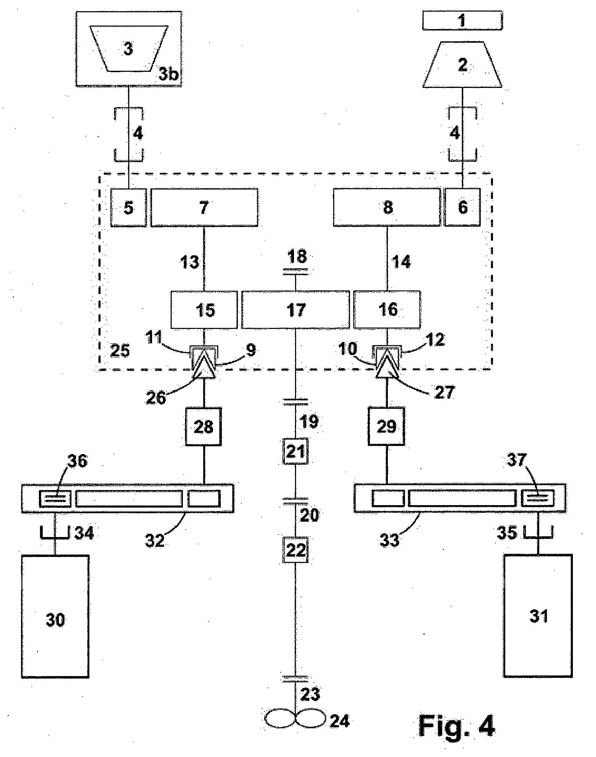

According to Figures 3 and 4, power is introduced by means of additional gearboxes (32, 33) in the gearbox (25) by means of a first phase of modifying the stern end pieces of the hollow shaft with another internal shaft (13) of the low pressure side and of the hollow shaft with another internal shaft (14) of the high pressure side, referred to as quill shaft, of the existing gearbox (25) by means of modifying or replacing the conical coupling (9) on the low pressure side and the other conical coupling (10) on the high pressure side, respectively, such that the modified coupling includes at its stern end a shaft for the power input from the respective electric propulsion engines (30, 31) through additional gearboxes (32, 33), optionally provided with respective hydraulic clutches (36, 37), and connected to the existing gearbox (25) by means of flexible couplings and/or clutches (28, 29) and with modified conical couplings (26, 27), the electric propulsion engines (30, 31) being connected to the additional gearboxes (32, 33) by means of additional flexible couplings (34, 35), locating the electric propulsion engines (30, 31) forward or, in an alternative embodiment, astern.

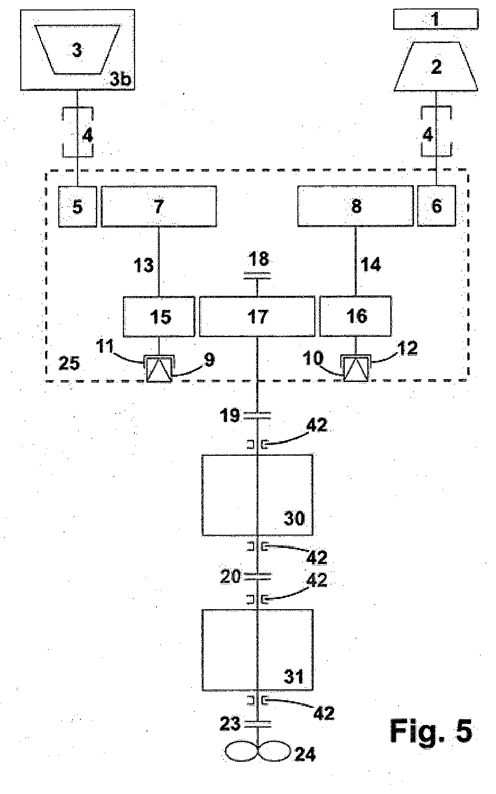

Introducing power in the shaft line (19, 20):
According to Figure 5, power is introduced by means of electric propulsion engines (30, 31) the shaft of which is the output shaft line assembly (19, 20) by means of a first phase of modifying the intermediate bow shaft (19) and/or the intermediate stern shaft (20) to allow housing the electric propulsion engines such that the electric propulsion engine (30) has the actual intermediate bow shaft (19) as a shaft and the second electric propulsion engine (31) has the actual intermediate stern shaft (20) as a shaft, ending with the phase of placing modified bearings (42).

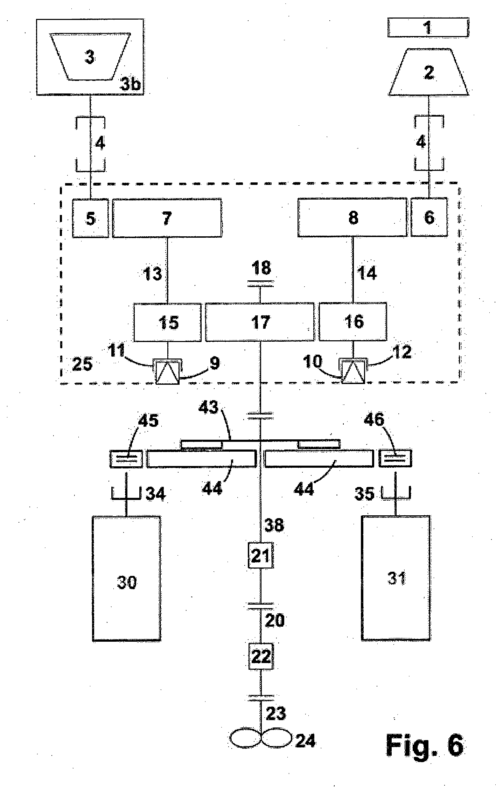

According to Figure 6, power is introduced by means of electric propulsion engines (30, 31) which introduce the power in the output shaft line assembly (19, 20) through one or two tunnel gear reducers by means of a first phase of modifying the intermediate bow shaft (19) to convert it into a modified intermediate bow shaft (38) on which one or several tunnel gear reducers is coupled in a second phase with a coupling (43) of the internal shaft, main wheels (44) and clutched pinions (45, 46), continuing with the phase of connecting the electric propulsion engines (30, 31) to the clutched pinions (45, 46) by means of additional flexible couplings (34, 35).

The carrier resulting from the conversion has a double propulsion plant: the former steam turbine (2, 3) propulsion plant and the new electric propulsion plant, being able to use one, the other or both, as needed, all this while maintaining both the output shaft line assembly (19, 20, 23) and the gearbox (25) initially existing in the carrier with the indicated modifications.

This method has a particular application to carriers with the following features:
Carrier between 120,000 and 170,000 m³.
Typical age of 10 years. This can range between 5 and 25 years.
Steam turbine propulsion.
Power between 20 and 30 MW.
A single fixed pitch propeller at about 80/90 rpm.
A turbine plant including: HP turbine, LP turbine, vacuum condenser, double reduction, open train gearbox, input at about 3000/4000 rpm and output at 80/90 rpm at the shaft line.
Two steam boilers at about 60/70 bars, reheated steam at 525/500°C.
Two turbo generators of about 3000/3500 KW.
A diesel generator with similar power.
Device for removing excess steam from the condenser to eliminate excess boil-off (Dump system).
Service speed: 19.5 knots.
Possibility of burning HFO and/or natural gas in the desired proportions. It can burn MGO in some special cases (at port) .

According to an embodiment of the invention that can be combined with the examples described above, the present invention consists of a method of converting steam turbine-powered LNG carriers, particularly of the type used for transporting liquefied natural gas, characterized in that it comprises adding one or several electric power generator sets (47) and locating one or several electric propulsion engines (30, 31) next to the shaft line assembly (19, 20, 23) and gearbox (25) existing in the steam turbine (2, 3) propulsion plant.

## Claims

1. A method of converting steam turbine-powered LNG carriers, particularly of the type used for transporting liquefied natural gas, the method changing propulsion by means of adding one or several electric power generator sets (47) powering through switchboards (48) and converters (50) one or several electric propulsion engines (30, 31) transmitting power by means of a mechanical connection with the gearbox (25), maintaining the steam turbine propulsion plant, such that the converted carrier further has diesel electric propulsion and hybrid propulsion combining the preceding two,
**characterized in that** the mechanical power of the electric propulsion engines (30, 31) is injected directly in the existing gearbox (25) by means of a first phase of modifying the stern end pieces of the hollow shaft with another internal shaft (13) of the low pressure side and of the hollow shaft with another internal shaft (14) of the high pressure side, referred to as quill shaft, of the existing gearbox (25) by means of modifying or replacing the conical coupling (9) on the low pressure side and the other conical coupling (10) on the high pressure side with modified conical couplings (26, 27), to continue with a phase of connecting the respective electric propulsion engines (30, 31) by means of flexible couplings and/or clutches (28, 29) connected to the modified conical couplings (26, 27) previously installed in the gearbox (25), locating the electric propulsion engines (30, 31) astern the gearbox (25).

2. A method of converting steam turbine-powered LNG carriers, particularly of the type used for transporting liquefied natural gas, the method changing propulsion by means of adding one or several electric power generator sets (47) powering through switchboards (48) and converters (50) one or several electric propulsion engines (30, 31) transmitting power by means of a mechanical connection with the gearbox (25), maintaining the steam turbine propulsion plant, such that the converted carrier further has diesel electric propulsion and hybrid propulsion combining the preceding two,
**characterized in that** the mechanical power of the electric propulsion engines (30, 31) is injected in the existing gearbox (25) by means of a first phase of modifying or replacing the stern end pieces of the hollow shaft with another internal shaft (13) of the low pressure side and of the hollow shaft with another internal shaft (14) of the high pressure side, referred to as quill shaft, of the existing gearbox (25) by means of modifying or replacing the conical coupling (9) on the low pressure side and the other conical coupling (10) on the high pressure side, to continue with a phase of connecting the respective electric propulsion engines (30, 31) to additional gearboxes (32, 33), optionally provided with respective hydraulic clutches (36, 37), and connected to the existing gearbox (25) by means of flexible couplings and/or clutches (28, 29) through the modified conical couplings (26, 27) previously formed in the gearbox (25), the electric propulsion engines (30, 31) being connected to the additional gearboxes (32, 33) by means of additional flexible couplings (34, 35), locating the electric propulsion..engines (30, 31) towards the bow or astern.

3. The method of converting steam turbine-powered LNG carriers according to claim 1 or 2, **characterized in that** it comprises adding auxiliary components of the electric power generators (47) selected from the group consisting of: high voltage switchboards (48), transformers (49), converters (50), additional low voltage switchboards (51), natural gas compressors (52), natural gas heat exchangers (53), pumps (54.), purifiers (55), auxiliary heat exchangers of the electric power generators (56) and exhaust gas boilers (57).

4. The method of converting steam turbine-powered LNG carriers according to the preceding claim, **characterized in that** both the electric power generators (47) and a substantial part of their auxiliary components (48, 49, 50, 51, 54, 55, 56, 57) are installed distributed in several prefabricated modules located on the main deck close or adjacent to the house of the engine room casing, with the exception of the natural gas. compressors and heat exchangers (52, 53) which will be installed in the compressor house existing in all LNG carriers in a new module adjacent to or in the proximities of said house.

5. The' method of converting steam turbine-powered LNG carriers according to any of the preceding claims, **characterized in that** the electric power generators (47) are dual-fuel diesel generators, giving rise to a diesel-electric propulsion combined with the existing steam turbine (2, 3) propulsion of the gas turbine type, giving rise to a turbo-electric propulsion combined with the existing steam turbine (2, 3) propulsion, or a diesel and gas turbine combination, giving rise to a composite diesel-turbo-electric propulsion combined with the existing steam turbine (2, 3) propulsion.

## Patentansprüche

1. Verfahren zum Umwandeln von dampfturbinenbetriebenen LNG-Tankern, insbesondere des Typs, der zum Transportieren von verflüssigtem Erdgas verwendet wird, wobei das Verfahren den Antrieb mittels des Hinzufügens von einem oder mehreren Sätzen von elektrischen Leistungsgeneratoren (47), die durch Schaltanlagen (48) und Wandler (50) eine oder mehrere elektrische Antriebsmotoren (30, 31) betreiben, welche Leistung mittels einer mechanischen Verbindung mit dem Getriebe (25) übertragen, ändert, worin die Dampfturbinenantriebsanlage erhaltet wird, sodass der umgewandelte Tanker ferner einen dieselelektrischen Antrieb und einen hybriden Antrieb, der die vorstehenden zwei kombiniert, aufweist,
**dadurch gekennzeichnet, dass** die mechanische Leistung der elektrischen Antriebsmotoren (30, 31) direkt in das bestehende Getriebe (25) eingeführt wird, mittels einer ersten Phase des Modifizierens der Heckendstücke der hohlen Welle mit einer anderen Innenwelle (13) von der Niederdruckseite und der Hohlwelle mit einer anderen Innenwelle (14) von der Hochdruckseite, auf die als *quill shaft* Bezug genommen wird, des bestehenden Getriebes (25), mittels Modifizierens oder Ersetzens der Kegelkupplung (9) auf der Niederdruckseite und der anderen Kegelkupplung (10) auf der Hochdruckseite mit modifizierten Kegelkupplungen (26, 27), um mit einer Phase des Verbindens der jeweiligen elektrischen Antriebsmotoren (30, 31) mittels flexibler Kopplungen und/oder Kupplungen (28, 29) fortzufahren, die mit den zuvor in dem Getriebe (25) installierten modifizierten Kegelkupplungen (26, 27) verbunden sind, worin die elektrischen Antriebsmotoren (30, 31) hinter dem Getriebe (25) angeordnet wird.

2. Verfahren zum Umwandeln von dampfturbinenbetriebenen LNG-Tankern, insbesondere des Typs, der zum Transportieren von verflüssigtem Erdgas verwendet wird, wobei das Verfahren den Antrieb mittels des Hinzufügens von einem oder mehreren Sätzen von elektrischen Leistungsgeneratoren (47), die durch Schaltanlagen (48) und Wandler (50) eine oder mehrere elektrische Antriebsmotoren (30, 31) betreiben, welche Leistung mittels einer mechanischen Verbindung mit dem Getriebe (25) übertragen, ändert, worin die Dampfturbinenantriebsanlage erhaltet wird, sodass der umgewandelte Tanker ferner einen dieselelektrischen Antrieb und einen hybriden Antrieb, der die vorstehenden zwei kombiniert, aufweist,
**dadurch gekennzeichnet, dass** die mechanische Leistung der elektrischen Antriebsmotoren (30, 31) in das bestehende Getriebe (25) eingeführt wird, mittels einer ersten Phase des Modifizierens oder Ersetzens der Heckendteile der Hohlwelle mit einer anderen Innenwelle (13) von der Niederdruckseite und der Hohlwelle mit einer anderen Innenwelle (14) von der Hochdruckseite, auf die als *quill shaft* Bezug genommen wird, des bestehenden Getriebes (25), mittels eines Modifizierens oder Ersetzens der Kegelkupplung (9) auf der Niederdruckseite und der anderen Kegelkupplung (10) auf der Hochdruckseite, um mit einer Phase des Verbindens der jeweiligen elektrischen Antriebsmotoren (30, 31) mit zusätzlichen Getrieben (32, 33) fortzufahren, die optional mit jeweiligen hydraulischen Kupplungen (36, 37) bereitgestellt sind und mit dem bestehenden Getriebe (25) mittels flexibler Kopplungen und/oder Kupplungen (28, 29) über die modifizierten zuvor in dem Getriebe (25) ausgebildeten Kegelkupplungen (26, 27) verbunden sind, wobei die elektrischen Antriebsmotoren (30, 31) mit den zusätzlichen Getrieben (32, 33) mittels zusätzlicher flexibler Kopplungen (34, 35) verbunden werden, worin die elektrischen Antriebsmotoren (30, 31) in Richtung des Bugs oder Hecks angeordnet wird.

3. Verfahren zum Umwandeln von dampfturbinenbetriebenen LNG-Tankern nach Anspruch 1 oder 2, **dadurch gekennzeichnet, dass** es ein Hinzufügen von Hilfskomponenten der elektrischen Leistungsgeneratoren (47) umfasst, die aus der Gruppe ausgewählt werden, die aus Hochspannungsschaltanlagen (48), Transformatoren (49), Wandlern (50), zusätzlichen Niedervoltschaltanlagen (51), Verdichtern für Erdgas (52), Wärmetauschern für Erdgas (53), Pumpen (54), Reinigern (55), Hilfswärmetauschern für die elektrischen Leistungsgeneratoren (56) und Abgaskesseln (57) besteht.

4. Verfahren zum Umwandeln von dampfturbinenbetriebenen LNG-Tankern nach dem vorstehenden Anspruch, **dadurch gekennzeichnet, dass** sowohl die elektrischen Leistungsgeneratoren (47) als auch ein wesentlicher Teil ihrer Hilfskomponenten (48, 49, 50, 51, 54, 55, 56, 57) in mehreren vorgefertigten Modulen verteilt installiert sind, die auf dem Hauptdeck nahe oder angrenzend an dem Haus des Maschinenraumgehäuses angeordnet sind, mit der Ausnahme der Verdichter für Erdgas und der Wärmetauscher (52, 53), die in dem Verdichterhaus, das in sämtlichen LNG-Tankern vorliegt, in einem neuen Modul installiert werden, das an das Haus angrenzt oder in seiner Nähe ist.

5. Verfahren zum Umwandeln von dampfturbinenbetriebenen LNG-Tankern nach einem der vorstehenden Ansprüche, **dadurch gekennzeichnet, dass** die elektrischen Leistungsgeneratoren (47) Dual-Fuel-Dieselgeneratoren sind, was zu einem dieselelektrischen Antrieb kombiniert mit dem bestehenden Dampfturbinenantrieb (2, 3) des Gasturbinentyps führt, was zu einem turboelektrischen Antrieb kombiniert mit dem bestehenden Dampfturbinenantrieb (2, 3) führt, oder zu einer Diesel-Gasturbinen-Kombination, die zu einem Verbund aus einem Diesel-Turbo-Elektroantrieb kombiniert mit dem bestehenden Dampfturbinenantrieb (2, 3) führt.

## Revendications

1. Procédé de conversion de méthaniers alimentés par turbine à vapeur, plus particulièrement du type utilisé pour transporter du gaz naturel liquéfié, le procédé modifiant la propulsion en ajoutant un ou plusieurs groupe(s) générateur(s) de puissance électrique(s) (47) qui alimente(nt), par le biais de tableaux de commande (48) et de convertisseurs (50), un ou plusieurs moteur(s) de propulsion électrique (30, 31) qui transmet(tent) une énergie à l'aide d'une liaison mécanique avec la boîte de vitesses (25), en maintenant l'unité de propulsion à turbine à vapeur, de sorte que le méthanier converti possède en outre une propulsion électrique par diesel et une propulsion hybride qui combinent les deux éléments précédents,
**caractérisé en ce que** la puissance mécanique des moteurs de propulsion électrique (30, 31) est injectée directement dans la boîte de vitesses existante (25) à l'aide d'une première phase de modification des pièces d'extrémité arrières de l'arbre creux avec un autre arbre interne (13) du côté basse pression, et de l'arbre creux avec un autre arbre interne (14) du côté haute pression, désigné « *quill shaft* », de la boîte de vitesses existante (25) en modifiant ou en remplaçant le couplage conique (9) côté basse pression, et l'autre couplage conique (10) côté haute pression avec des couplages coniques modifiés (26, 27), et d'une phase de raccordement des moteurs de propulsion électrique respectifs (30, 31) à l'aide de couplages flexibles et/ou d'embrayages (28, 29) reliés aux couplages coniques modifiés (26, 27) préalablement installés dans la boîte de vitesses (25), en plaçant les moteurs de propulsion électrique (30, 31) à l'arrière de la boîte de vitesses (25).

2. Procédé de conversion de méthaniers alimentés par turbine à vapeur, plus particulièrement du type utilisé pour transporter du gaz naturel liquéfié, le procédé modifiant la propulsion en ajoutant un ou plusieurs groupe(s) générateur(s) de puissance électrique(s) (47) qui alimente(nt), par le biais de tableaux de commande (48) et de convertisseurs (50), un ou plusieurs moteur(s) de propulsion électrique (30, 31) qui transmet(tent) une énergie à l'aide d'une liaison mécanique avec la boîte de vitesses (25), en maintenant l'unité de propulsion à turbine à vapeur, de sorte que le méthanier converti possède en outre une propulsion électrique par diesel et une propulsion hybride qui combinent les deux éléments précédents,
**caractérisé en ce que** la puissance mécanique des moteurs de propulsion électrique (30, 31) est injectée dans la boîte de vitesses existante (25) à l'aide d'une première phase de modification ou de replacement des pièces d'extrémité arrières de l'arbre creux avec un autre arbre interne (13) du côté basse pression, et de l'arbre creux avec un autre arbre interne (14) du côté haute pression, désigné « *quill shaft* », de la boîte de vitesses existante (25) en modifiant ou en remplaçant le couplage conique (9) côté basse pression, et l'autre couplage conique (10) côté haute pression, et d'une phase de raccordement des moteurs de propulsion électrique respectifs (30, 31) à boîtes de vitesses supplémentaires (32, 33), munies en option d'embrayages hydrauliques respectifs (36, 37), et reliées à la boîte de vitesses existante (25) à l'aide de couplages flexibles et/ou d'embrayages (28, 29) par le biais des couplages coniques modifiés (26, 27) préalablement formés dans la boîte de vitesses (25), les moteurs de propulsion électrique (30, 31) étant reliés aux boîtes de vitesses supplémentaires (32, 33) à l'aide de couplages flexibles supplémentaires (34, 35), en plaçant les moteurs de propulsion électrique (30, 31) vers l'avant ou vers l'arrière.

3. Procédé de conversion de méthaniers alimentés par turbine à vapeur selon la revendication 1 ou 2, **caractérisé en ce qu'**il comprend l'ajout de composants auxiliaires des générateurs de puissance électriques (47) choisis parmi le groupe consistant en : des tableaux de commande à haute tension (48), des transformateurs (49), des convertisseurs (50), des tableaux de commande supplémentaires à basse tension (51), des compresseurs de gaz naturel (52), des échangeurs thermiques au gaz naturel (53), des pompes (54), des purificateurs (55), des échangeurs thermiques auxiliaires des générateurs électriques (56), et des chaudières de gaz d'échappement (57).

4. Procédé de conversion de méthaniers alimentés par turbine à vapeur selon la revendication précédente, **caractérisé en ce que** les générateurs de puissance électriques (47) et une partie substantielle de leurs composants auxiliaires (48, 49, 50, 51, 54, 55, 56, 57) sont répartis dans plusieurs modules préfabriqués situés sur le pont principal, à proximité de ou de manière adjacente à l'enceinte de la salle des machines, à l'exception des compresseurs de gaz naturel et des échangeurs thermiques (52, 53) qui seront installés dans l'enceinte de compresseur qui existe sur tous les méthaniers, dans un nouveau module adjacent ou se trouvant à proximité de ladite enceinte.

5. Procédé de conversion de méthaniers alimentés par turbine à vapeur selon l'une quelconque des revendications précédentes, **caractérisé en ce que** les générateurs de puissance électriques (47) sont des générateurs diesel à double combustible, qui engendrent une propulsion diesel/électrique combinée à la propulsion par turbine à vapeur existante (2, 3) du type par turbine à gaz, une propulsion turboélectrique combinée à la propulsion par turbine à vapeur existante (2, 3), ou une combinaison de turbine à gaz et diesel, qui engendre une propulsion diesel/turboélectrique composite combinée à la propulsion par turbine à vapeur existante (2, 3).
